# EUROPÄISCHE PATENTSCHRIFT

(11) **EP 1 216 884 B1**
(45) Veröffentlichungstag und Bekanntmachung des Hinweises auf die Patenterteilung: **01.03.2006**
(21) Anmeldenummer: 01129715.7
(22) Anmeldetag: 13.12.2001
(51) Int. Cl.: B60R 5/04, B60R 21/06

(54) **Vorrichtung zur Aufnahme eines Laderaumabdeckrollos oder Sicherheitsnetzes**
Device for holding a luggage compartment cover or security net
Dispositif adapté à recevoir un volet cache-bagages ou filet de sécurité

(30) Priorität: 19.12.2000 DE 10063466
(43) Veröffentlichungstag der Anmeldung: 26.06.2002
(73) Patentinhaber: BOS GmbH & Co. KG, 73760 Ostfildern (DE)
(72) Erfinder: Sitzler, Wolfgang, 42111 Wuppertal (DE); Crisp, Terence Sam, 3140 Keerbergen (BE)
(74) Vertreter: Patentanwälte Ruff, Wilhelm, Beier, Dauster & Partner

(56) Entgegenhaltungen:
- EP-A- 0 258 823
- DE-A- 19 728 547
- DE-C- 19 818 583
- US-A- 5 593 200
- US-A- 5 702 143
- PATENT ABSTRACTS OF JAPAN vol. 2000, no. 02, 29. Februar 2000 (2000-02-29) & JP 11 310084 A (MITSUBISHI MOTORS CORP), 9. November 1999 (1999-11-09)

## Beschreibung

Die Erfindung betrifft eine Vorrichtung zur Aufnahme einer flexiblen, insbesondere von einer Wickelwelle entgegen der Wirkung eines Federmotors abziehbaren Werkstoffbahn einer Kfz-Sicherheitseinrichtung. Bei der Kfz-Sicherheitseinrichtung kann es sich um ein Sicherheitsnetz, eine Laderaumabdeckung, aber auch um andere Sicherheitseinrichtungen mit einer flexiblen Werkstoffbahn handeln.

Eine solche Vorrichtung ist aus der DE-GM 75 00 822.9 bekannt. Hier ist bereits eine Befestigungsleiste beschrieben, die mit Hilfe unterschiedlich ausgebildeter Verriegelungselemente an der Rückwand einer Kfz-Fondlehne lösbar befestigt werden kann. An der Befestigungsleiste ist beispielsweise eine Kfz-Laderaumabdeckung angebracht.

Eine weitere Vorrichtung ist aus der DE 195 26 666 A1 bekannt.

Aus dieser Schrift ist eine Laderaumabdeckung bekannt, deren Gehäuse lösbar in zwei Aufnahmetaschen befestigt werden kann, die an den Kfz-Seitenwänden angeordnet sind. Die Anordnung ist hier sehr kompliziert getroffen, da den an der Kfz-Seitenwand angebrachten Aufnahmetaschen neben den als Verankerungszapfen ausgebildeten Verriegelungselementen zusätzlich schwenkbar gelagerte Verrieglungsglieder sowie entsprechende Schraubenfedern zugeordnet sind.

Die Befestigung und die Lösung des Gehäuses von der Kfz-Rücklehne erfolgt durch eine Bewegung des Gehäuses entlang einer Richtung im wesentlichen parallel zur Fahrzeug-Längsachse.

Eine Vorrichtung gemäß dem Oberbegriff des Anspruchs 1 ist aus DE-A- 197 28 547 bekannt.

Der Erfindung liegt die Aufgabe zu Grunde, ausgehend von dem zuletzt aufgeführten Stand der Technik eine Vorrichtung zur Verfügung zu stellen, die eine vereinfachte Handhabung zur Montage bzw. Demontage der Vorrichtung ermöglicht.

Die Erfindung löst diese Aufgabe mit den Merkmalen des Anspruches 1, und ist demgemäß dadurch gekennzeichnet, daß die Befestigungselemente gemeinsam mit fahrzeugseitig angeordneten Gegenelementen ein Drehlager für eine Schwenkbewegung des Gehäuses relativ zur Fahrzeugwand ausbilden.

Das Prinzip der Erfindung besteht somit im wesentlichen darin, an Stelle der im Stand der Technik gemäß DE 195 26 666 A1 bekannten Verschiebung des Gehäuses relativ zu dem Fahrzeug entlang einer Geraden nunmehr eine Schwenkbewegung des Gehäuses zur Montage und Demontage des Gehäuses an der Kfz-Wand vorzusehen.

Die Erfindung ermöglicht insbesondere eine Ausgestaltung der Befestigungselemente und der Gegenelemente derart, daß das Gehäuse in entsprechende Gegenelemente eingehängt werden kann, wobei die Konstruktion in vorteilhafter Weise dabei auch so gewählt werden kann, daß - insbesondere bei zwei Paaren von Befestigungselementen und Gegenelementen - zunächst ein Paar von Befestigungselementen und Gegenelementen miteinander in Eingriff gebracht werden kann, was während der Montage durch Aufnahme eines Teils der Schwerkraft der Vorrichtung von diesem Paar von Befestigungselementen und Gegenelementen eine gewisse Erleichterung des Benutzers insofern darstellt, als daß mit geringerer Kraftanstrengung nun das zweite Paar von Befestigungselementen und Gegenelementen miteinander in Eingriff gebracht werden kann.

Das Vorsehen einer Schwenkbewegung zur Montage bzw. Demontage der Vorrichtung ermöglicht unabhängig davon aber nunmehr auch, daß durch eine geschickte Wahl des Schwerpunkts der Vorrichtung nach dem Einhängen der Befestigungselemente in die Gegenelemente eine automatische Verschwenkung des Gehäuses relativ zu der Fahrzeugwand in eine selbsthaltende Verriegelungslage hin erfolgen kann. Auf diese Weise kann eine Gebrauchslage geführt, mit großer Sicherheit, ordnungsgemäß erreicht werden, was angesichts der Funktion einer Kfz-Sicherheitseinrichtung, insbesondere im Crashfall, eine große Bedeutung besitzt.

Die gesamte Vorrichtung kann beispielsweise hinsichtlich zusätzlicher Riegelelemente derart ausgelegt werden, daß Riegelelemente, die insbesondere federbelastet sind, derart ausgebildet werden können, daß auf Grund der automatischen Schwenkbewegung diese Riegelelemente in eine Verriegelungslage einschnappen. Dabei können besonders gestaltete Führungsflächen am Riegelelement bzw. im Bereich der Gegenelemente besonders einfach ausgebildet werden.

Gleichermaßen besteht - falls gewünscht - auf einfache Weise die Möglichkeit die Vorrichtung konstruktiv derart auszulegen, daß durch eine geeignete, geänderte Wahl des Schwerpunkts der Vorrichtung eine weitgehende automatische Verschwenkung der Vorrichtung relativ zur Fahrzeugwand nach Betätigung eines Entriegelungselementes derart erfolgen kann, daß die Entnahme der Vorrichtung von der Fahrzeugwand erleichtert ist.

Zusammenfassend läßt sich feststellen, daß die schwenkbare Anordnung der Vorrichtung an einer Fahrzeugwand nunmehr die Ausnutzung der Schwerkraft in Bezug einer sicheren Ausgestaltung der Vorrichtung wie auch hinsichtlich einer komfortablen Ausgestaltung der Vorrichtung ermöglicht.

Die gemeinsame Ausbildung eines Drehlagers durch die Befestigungselemente und die Gegenelemente bedeutet im Sinne der Erfindung, daß beispielsweise die Befestigungselemente als gelagerte Welle in eine von den Gegenelementen gebildete Lageraufnahme eingreifen können. Alternativ kann auch vorgesehen sein, daß die Lageraufnahme im Bereich der Befestigungselemente vorgesehen ist, und die gelagerte Welle von den Gegenelementen bereitgestellt wird.

Schließlich kann auch vorgesehen sein, daß Teile der Lageraufnahme sowohl Befestigungselementen wie auch von Gegenelementen bereitgestellt werden.

Das erfindungsgemäß ausgebildete Drehlager sollte eine Schwenkbewegung des Gehäuses relativ zu der Fahrzeugwand zumindest über einen geringen Winkelbereich ermöglichen.

Gemäß einer vorteilhaften Ausgestaltung der Erfindung umfassen die Befestigungselemente einen klauenartigen Vorsprung. Diese Ausbildung besitzt den Vorteil, daß das Drehlager oder Schwenklager auf besonders einfache Weise möglich wird, in dem der klauenartige Vorsprung einen entsprechenden Bereich der Gegenelemente teilweise umgreift, also hintergreift und sich mit seinem freien Ende an den Gegenelementen abstützt. Die Gegenelemente bilden in diesem Fall vorteilhafterweise die gesamte Drehlageraufnahme für den klauenartigen Vorsprung.

Klauenartige Vorsprünge erleichtern dabei das Einhängen der erfindungsgemäßen Vorrichtung bei der Montage, so daß die Gegenelemente auch taschenförmig ausgebildet sein können. Dies wiederum ermöglicht eine versteckte Anordnung der Gegenelemente derart, daß diese beispielsweise mit dem Rücksitz einer Kfz-Fondrücklehne bündig abschließen.

Gemäß einer weiteren vorteilhaften Ausgestaltung der Erfindung ist den Befestigungselementen ein federbelasteter Riegel zugeordnet. Diese Ausbildung ermöglicht es insbesondere, den Riegel als Schnapphaken auszubilden, so daß ein automatisches Verschwenken der Vorrichtung nach dem Einhängen der klauenartigen Vorsprünge weitgehend automatisch erfolgen kann, und die Verriegelungslage auf diese Weise sicher erreicht wird. Außerdem bietet sich hiermit die Möglichkeit, besondere Betätigungselemente für den Riegel vorzusehen, um diesen in seine Lösestellung verlagern zu können.

Gemäß einer weiteren vorteilhaften Ausgestaltung ist dem Riegel eine Führungsfläche zugeordnet. Dies bietet eine besonders einfache Möglichkeit, eine automatische Verriegelung oder Verrastung zu erreichen.

Gemäß einer weiteren vorteilhaften Ausgestaltung der Erfindung weist der Riegel einen Betätigungsansatz auf. Diese Ausbildung bietet insbesondere den Vorteil, daß der Betätigungsansatz räumlich so zum Riegel angeordnet sein kann, daß der Riegel einem weiteren Vorsprung an der Vorrichtung zugeordnet ist, der Vorsprung in eine entsprechende taschenartige Aufnahme an der Fahrzeugwand eingreifen kann, und über den Betätigungsansatz, der im montierten Zustand der Vorrichtung aus der taschenartigen Aufnahme herausreicht, eine einfache Zugangsmöglichkeit zur Betätigung des Riegels in der Lösestellung geschaffen ist.

Gemäß einer weiteren vorteilhaften Ausgestaltung der Erfindung ist der Riegel von einem zentralen Betätigungselement betätigbar. Insbesondere ergibt sich hiermit die Möglichkeit, das zentrale Betätigungselement im Bereich des Schwerpunktes der Vorrichtung anzuordnen, so daß eine einhändige Montage und Demontage der Vorrichtung auf einfache Weise möglich wird. Insbesondere bietet sich auf diese Weise auch die Möglichkeit, mehrere, beispielsweise zwei symmetrisch zueinander angeordnete Riegel an der Vorrichtung vorzusehen, die gemeinsam von einem zentralen Betätigungselement betätigbar sind.

Gemäß einer weiteren vorteilhaften Ausgestaltung der Erfindung ist dem Betätigungselement eine schwenkbare Welle zugeordnet. Dies ermöglicht eine besonders einfache Ausbildung und Anordnung eines Betätigungselementes.

Gemäß einer weiteren vorteilhaften Ausgestaltung der Erfindung sind wenigstens zwei Riegel in im wesentlichen symmetrischer Anordnung vorgesehen, die von dem Betätigungselement gemeinsam betätigbar sind. Dies ermöglicht beispielsweise das Vorsehen einer einzigen, gemeinsamen, schwenkbaren Welle, die von dem gemeinsamen Betätigungselement schwenkbar ist und beide Riegel gemeinsam betätigt. Gleichzeitig besteht die Möglichkeit, die Vorrichtung an zwei unterschiedlichen Axialschnitten zu arretieren, beispielsweise im Bereich der jeweiligen klauenartigen Vorsprünge, so daß einerseits eine besonders hohe Sicherheit erreicht wird, aber auch eine einfache Montage der Vorrichtung durch sukzessives Einhängen der beiden klauenartigen Vorsprünge möglich wird.

Gemäß einer weiteren vorteilhaften Ausgestaltung der Erfindung umfassen die Gegenelemente taschenartige Aufnahmen. Diese dienen vorzugsweise zur Aufnahme der klauenartigen Vorsprünge bzw. auch des jeweiligen Riegels. Hiermit besteht die Möglichkeit, die Gegenelemente im wesentlichen bündig - mit Ausnahme der taschenartige Aufnahme - relativ zu einer Ebene anzuordnen, entlang derer sich die Rückseite der Kfz-Fondrücklehne erstreckt. Somit kann insbesondere erreicht werden, daß von der Rückseite der Rücklehne keinerlei Vorsprünge in den Innenraum des Kfz's hinein vorragen, so daß auch bei umgeklappter Rücklehne, beispielsweise in eine im wesentlichen horizontale Position, in diesem vergrößerten Laderaum des Kfz befindliche, zu transportierende Güter keinerlei Störkanten ausgesetzt sind.

Gemäß einer weiteren vorteilhaften Ausgestaltung der Erfindung umfassen die Gegenelemente einen im wesentlichen T-förmigen Flansch. Dies bietet die Möglichkeit einer besonders einfachen Ausgestaltung der Gegenelemente, da ein T-förmiger Flansch zwei hinterschnittene Bereiche zu Angriff der klauenartigen Vorsprünge einerseits und des Riegel andererseits bereitstellt. Außerdem bieten sich hiermit besonders einfache Möglichkeiten der Befestigung eines derartigen T-förmigen Flansches an einer Fahrzeugwand.

Gemäß einer weiteren vorteilhaften Ausgestaltung der Erfindung ist der Schwerpunkt der Vorrichtung so gewählt, daß bei in montiertem Zustand befindlicher Vorrichtung der Schwerpunkt auf der der Fahrzeugwand abgewandten Seite einer durch die Drehlagerbereiche zum Erdmittelpunkt hin verlaufenden Geraden liegt. Dies ermöglicht auf einfache Weise eine automatische Verriegelung der Vorrichtung derart, daß nach dem Einhängen der jeweiligen klauenartigen Vorsprünge in die Gegenelemente ein automatisches Verschwenken der Vorrichtung in ihre Verriegelungslage hinein erfolgt. Auf diese Weise ist die Vorrichtung sicher, unverlierbar, und auch im Falle eines Crashs auf besonders stabile Weise gesichert an der Fahrzeugwand angebracht.

Gemäß einer weiteren vorteilhaften alternativen Ausgestaltung der Erfindung ist die Schwerpunktlage der Vorrichtung so gewählt, daß bei in montiertem Zustand befindlicher Vorrichtung der Schwerpunkt der Vorrichtung auf der der Fahrzeugwand zugewandten Seite einer durch die Drehlagerbereiche zum Endmittelpunkt hin verlaufenden Geraden liegt. Diese Ausbildung bietet den Vorteil, daß nach Betätigen des Betätigungselementes zum Lösen der Riegel die Vorrichtung automatisch in eine Vor-Demontageposition hineinschwenken kann, in der die Entnahme der Vorrichtung von der Fahrzeugwand erleichtert möglich ist.

Weitere vorteilhafte Ausgestaltungen der Erfindung ergeben sich aus den nicht zitierten Unteransprüchen sowie an Hand der nun folgenden Beschreibung mehrerer in den Zeichnungen dargestellter Ausführungsbeispiele. Darin zeigen:
Fig. 1 in perspektivischer, schematischer Ansicht eine erfindungsgemäße Vorrichtung mit einem Sicherheitsnetz sowie die hintere Rücklehne eines Fahrzeugrückraums in Hinteransicht,
Fig. 2 in schematischer teilgeschnittener Ansicht eine erfindungsgemäße Vorrichtung mit Befestigungselementen mit gegenüber Fig. 1 eingefahrenem Sicherheitsnetz und einen entsprechenden Rücklehnenbereich mit den Gegenelementen, etwa entlang der Schnittlinie II-II in Fig. 1,
Fig. 3 ein zweites Ausführungsbeispiel einer erfindungsgemäßen Vorrichtung in einer Darstellung gemäß Fig. 2, wobei Befestigungselemente und Gegenelemente bereits teilweise miteinander in Eingriff gebracht sind,
Fig. 4 in perspektivischer, schematischer Unteransicht die erfindungsgemäße Vorrichtung gemäß Fig. 2, wobei die Befestigungselemente weggelassen worden sind, und
Fig. 5 in schematischer Ansicht ein drittes Ausführungsbeispiel der erfindungsgemäßen Vorrichtung mit einer an der Unterseite der Vorrichtung anliegenden Hand eines Benutzers.

Gleiche bzw. vergleichbare Elemente oder Teile werden in der nun folgenden Figurenbeschreibung der Übersichtlichkeit halber mit gleichen Bezugszeichen bezeichnet.

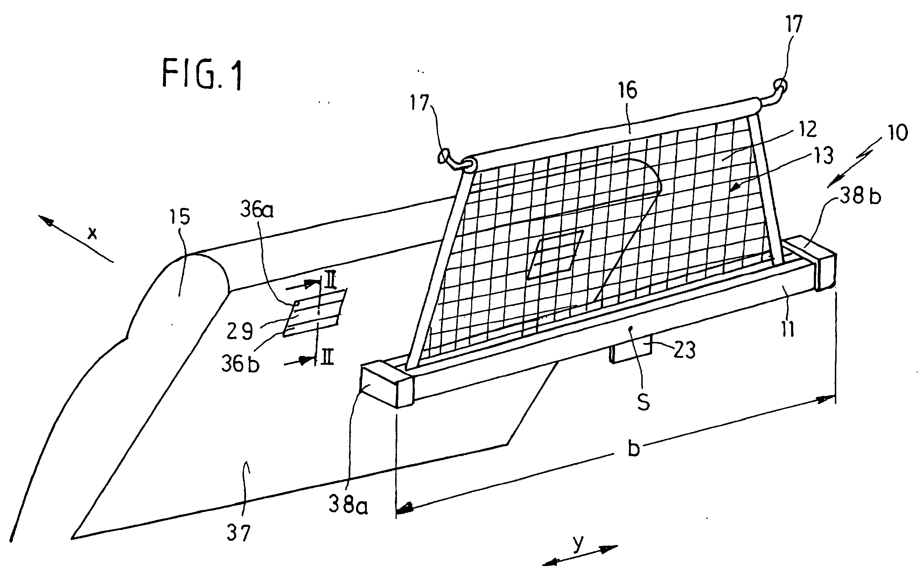

Die in den Figuren in ihrer Gesamtheit mit 10 bezeichnete Vorrichtung weist ein Gehäuse 11 auf und dient der Aufnahme und insbesondere auch Halterung einer Werkstoffbahn 12. Bei der Werkstoffbahn 12 kann es sich, wie gemäß Fig. 1 dargestellt, um ein Sicherheitsnetz 13 handeln, welches insbesondere in im wesentlichen vertikaler Richtung bei montierter Vorrichtung 10 aus dem kassettenartig ausgebildeten Gehäuse 11 ausziehbar und mittels einer Haltestange 16 und beispielsweise endseitig an der Haltestange 16 vorgesehener Halteenden 17 in fahrzeugseitige, insbesondere im Bereich des Dachhimmels oder der oberen Seitenwände vorgesehene Aufnahmetaschen formschlüssig eingehängt werden kann.

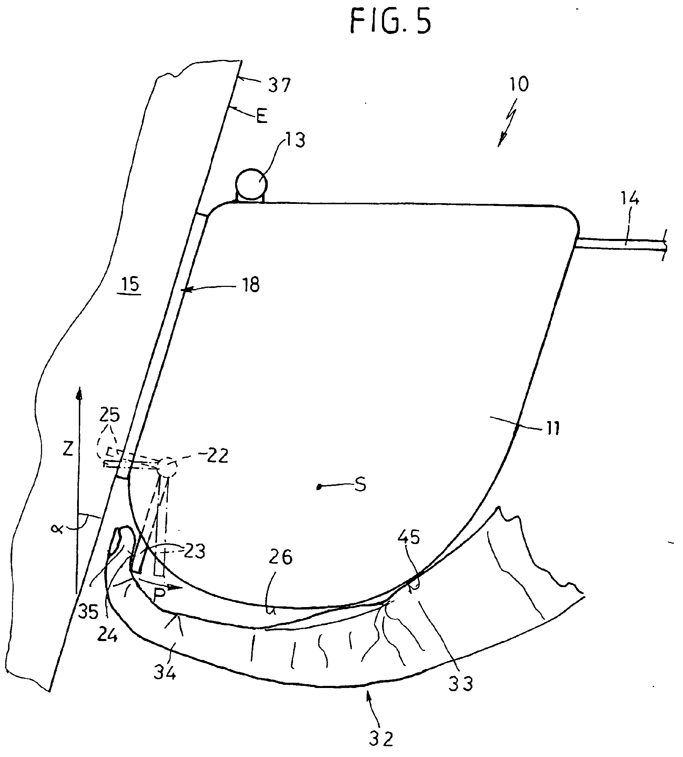

Fig. 5 deutet alternativ an, daß die Vorrichtung 10 auch eine Laderaumabdeckung 14 aufnehmen kann, die in ausgezogenem Zustand im wesentlichen horizontal im Fahrzeug angeordnet ist und beispielsweise im Bereich der Hecktür an den Fahrzeugwänden in ihrer ausgezogenen Position befestigt werden kann. Außerdem ist aus Fig. 5 bereits ersichtlich, daß die Vorrichtung 10 sowohl ein Sicherheitsnetz 13 wie auch gleichzeitig eine Laderaumabdeckung 14 aufnehmen kann.

Die erfindungsgemäße Vorrichtung 10 ist lösbar an einer Rücklehne 15 (Fig.1) befestigbar, die zwischen einem Fahrgastrückraum und einem Laderaum angeordnet ist. Selbstverständlich ist es bei Bedarf auch möglich, die Vorrichtung 10 im Bereich der Fahrzeugseitenwände lösbar zu befestigen.

Bei Betrachtung der Fig. 1 wird deutlich, daß die axiale Länge b der Vorrichtung 10 bei Betrachtung in Richtung y also, im wesentlichen senkrecht zur Fahrtrichtung x, maximal der Innenraumbreite des Kraftfahrzeugs entsprechen kann.

Eine Demontage einer erfindungsgemäßen Vorrichtung 10 kommt beispielsweise in Betracht, um einen störkantenfreien Laderaum zu gewährleisten, insbesondere auch bei in Fahrtrichtung x nach vorn umgelegter Rücklehne 15, wenn die Ladefläche, die auf diese Weise teilweise von der Rückseite 37 der Rücklehne 15 gebildet wird, im wesentlichen durchgehend und vorsprungfrei ausgebildet sein soll.

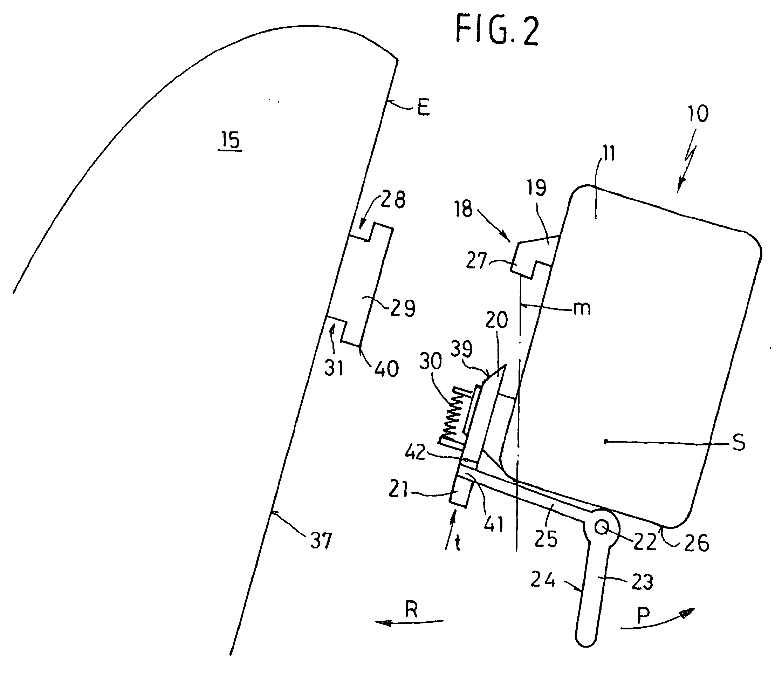

Fig. 2 soll zunächst nur schematisch die Anordnung von Befestigungselementen 18 und Gegenelementen 29 erläutern: An dem Gehäuse 11 der Vorrichtung 10 ist im Bereich des in Fig. 2 linken oberen Eckbereichs, vorzugsweise im Bereich der beiden axialen Endbereiche 38a, 38b der Vorrichtung 10, die z.B. auch als Endkappen ausgebildet sein können, jeweils ein klauenartiger Vorsprung 19 angeordnet. Dieser dient dazu, in eine entsprechende, im wesentlichen formschlüssige Nut 28 eingehängt zu werden, welche von einem im wesentlichen T-förmigen Flansch 29, der an der Rücklehne 15 angeordnet ist, bereitgestellt wird.

Am Gehäuse 11 ist dem klauenartigen Vorsprung 19 gegenüberliegend ein entlang der Richtung t verschiebbar gelagerter Riegel 20 angeordnet. Dieser weist eine geneigte Führungsfläche 39 auf, die mit einem entsprechenden Eckbereich 40 des T-fömigen Flansches zusammenwirkt.

Der Riegel 20 ist von einem Federelement 30 in seine in Fig. 2 dargestellte ausgefahrene Position hin belastet, die die Sperrstellung des Riegels 20 darstellt.

Zur Montage der Vorrichtung 10 an der Rücklehne 15 des Fahrzeugs wird die Vorrichtung 10 mit ihren beiden klauenartigen Vorsprüngen 19 zunächst in die entsprechenden Nuten 28 des T-förmigen Flansches 29 eingehängt. Anschließend kann - in Abhängigkeit von der Wahl des Schwerpunktes S, worauf später noch detailliert eingegangen wird - die gesamte Vorrichtung 10 um eine Schwenkachse herum, die im Bereich der Nut 28 bzw. des in die Nut 28 eingehängten freien Endes 27 des klauenförmigen Vorsprungs 19 liegt, im wesentlichen entlang dem Pfeil R verschwenkt werden, bis die Führungsfläche 39 des Riegels 20 auf den Eckbereichs 40 des T-förmigen Flansches 29 trifft. Bei fortlaufender Schwenkbewegung entlang der Richtung R wird der Riegel 20 entgegen der Richtung t bezüglich Fig. 2 im wesentlichen nach unten entgegen dem Druck der Feder 30 verschoben, und schnappt schließlich in die untere Nut 31 des T-förmigen Flansches 29 ein. In dieser Lage ist die Vorrichtung 10 dauerhaft sicher an der Rücklehne 15 arretiert. Eine selbsttätige Lösung der Vorrichtung 10 ist in der Montageposition somit sicher ausgeschlossen.

Zur Demontage der Vorrichtung 10 von der Rückwand 15 des Kfz wird von einem Benutzer ein Griffteil 23, welches flügelartig, schwenkbar um eine Schwenkachse 22 herum an dem Gehäuse 11 befestigt ist, im wesentlichen entlang dem Pfeil P verschwenkt. Ein drehfest mit dem Griffteil 23 oder der schwenkbaren Welle 22 verbundenes Kopplungsmittel 25 greift mit seinem freien Ende 41 in eine Aufnahme 42 ein, die an einem Betätigungsansatz 21 für den Riegel 20 angeordnet ist.

Durch Verschwenken des Griffteils 23 entgegen dem Uhrzeigersinn entlang dem Pfeil P wird der Riegel 20 entgegen der Federkraft in seine Lösestellung versetzt, so daß die Vorrichtung 10 entgegengesetzt dem Pfeil R verschwenkt werden kann und mit ihren klauenartigen Vorsprüngen 19 aus den entsprechenden Nuten 28 auf einfache Weise entnommen werden kann.

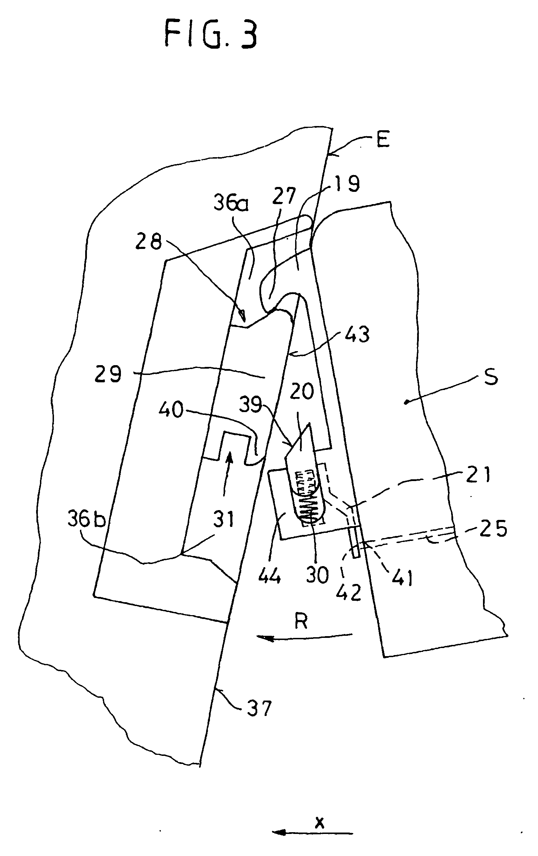

Der Schwerpunkt S der Vorrichtung, der in den Figuren nur schematisch angedeutet ist, kann derart gewählt werden, daß er sich, wie in Fig. 2 dargestellt, auf der der Fahrzeuglehne abgewandten Seite einer Geraden m befindet, die durch den von dem klauenartigen Vorsprung 19 und der Nut 28 gebildeten Drehlagerbereich hindurch zum Erdmittelpunkt verläuft, einer Gerade also, die die Richtung der Schwerkraft darstellt. Bei dieser Wahl des Schwerpunktes S, die in den Fig. 2 und 3 angedeutet ist, findet nach dem Einhängen der klauenartigen Vorsprünge 19 in die entsprechenden Nuten 28 nach dem Loslassen der Vorrichtung 10 eine automatische Verschwenkung der Vorrichtung 10 in ihre Verriegelungslage statt. Auf diese Weise kann mit größtmöglicher Sicherheit dafür gesorgt werden, daß eine ordnungsgemäße Montageposition erreicht wird.

Wird der Schwerpunkt S der Vorrichtung durch eine andere Konstruktion der Vorrichtung 10 derart positioniert, daß er auf der der Gerade m gegenüberliegenden Seite, also der der Fahrzeuglehne 15 zugewandten Seite der Geraden m liegt, so kann die Demontage der Vorrichtung 10 dadurch erleichtert werden, daß nach Betätigung des Betätigungselementes 23 durch einen Benutzer die Vorrichtung 10 automatisch in eine entriegelte Position entgegen dem Pfeil R verschwenkt, aus der die Vorrichtung 10 sehr leicht entnehmbar ist.

Wie sich insbesondere aus der Fig. 5 ergibt, ist die Rücklehne 15 in der Regel relativ zu einer vertikalen Achse z, welche im wesentlichen normal zu dem Boden steht, auf dem sich das Fahrzeug befindet, unter einem Winkel α geneigt angeordnet. Die Rücklehne 15, bzw. deren Rückseite 37 ist dabei im wesentlichen entlang einer Ebene E angeordnet.

Beim Ausführungsbeispiel gemäß Fig. 3 sind die Gegenelemente 28, 29 derart angeordnet, daß der T-förmige Flansch 29 mit seiner Außenseite 43 bündig entlang der Ebene E angeordnet ist, so daß lediglich taschenartige Aufnahmen 36a, 36b von der Ebene E in Fahrtrichtung x zurückspringen. Auf diese Weise kann die Rücklehne 15 mit ihrer Rückseite 37 vollständig vorsprungfrei, und somit störkantenfrei, ausgebildet werden.

Das Vorsehen eines Betätigungsansatzes 21, der mit dem Riegel 20 gekoppelt ist (Fig. 3) ermöglicht dabei eine Unterbringung des Riegels 20 sowie der entsprechenden am Gehäuse 10 befestigten Riegelaufnahme 44, in der Aufnahme 36b, wobei die Betätigung des Riegels 20 mittelbar über den Betätigungsansatz 21 jedoch auf bequeme Weise vom Laderaum her erfolgen kann. Die taschenförmigen Aufnahmen 36b können somit bei geschickter Konstruktion des Betätigungsansatzes 21 relativ klein ausgebildet werden.

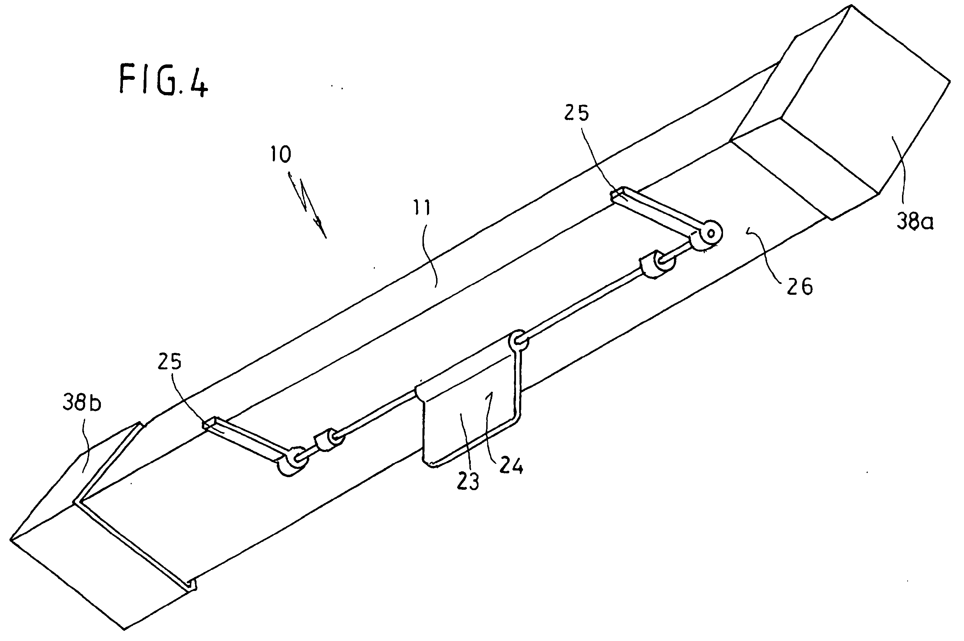

Das Griffteil 23 ist in den Figuren 1, 2 und 4 übertrieben groß und nur schematisch dargestellt. Eine ebenfalls schematische, einer tatsächlichen Ausführungsform jedoch näher kommende Ausführung zeigt Fig. 5:

Hier ist eine Vorrichtung 10 mit einem Gehäuse 11 dargestellt, dessen Unterseite 26 eine bezüglich den eingangs beschriebenen Ausführungsbeispielen vorteilhafte Struktur aufweist: An der Unterseite 26 des Gehäuses 11 ist eine Angriffsfläche 45 angeordnet, an der ein Handballen 33 einer schematisch angedeuteten Hand 32 eines Benutzers zum Anliegen kommt.

Das Griffteil 23 ist in der zuvor beschriebenen Weise schwenkbar an dem Gehäuse 11 angeordnet. Die Dimensionen sind hier jedoch so gewählt, daß eine Betätigungsfläche 24 des Griffteils 23 von dem Benutzer bequem mit seinen Fingern 34, insbesondere dem freien, äußeren Fingerglied 35, gegebenenfalls auch mehreren Fingergliedern 35, betätigt werden kann, während der Handballen 33 der Hand 32 dieses Benutzers an der Angriffsfläche 45 anliegt. Angriffsfläche 45 und Griffteil 23 sind dabei im Bereich des Schwerpunktes S angeordnet, so daß ein Benutzer einhändig die Vorrichtung 10 ergreifen kann, das Griffteil 23 und die Schwenkachse 22 herum entlang dem Pfeil P verschwenken kann und die Vorrichtung 10 von der Fahrzeugrücklehne 15 entnehmen kann, ohne seine Hand von dem Gehäuse 11 der Vorrichtung 10 zu lösen oder die räumliche Lage seiner Hand 32 zu dem Gehäuse 11 der Vorrichtung 10 zu ändern. Das Griffteil 23 wird dabei von der in gestrichelten Linien dargestellten Sperrposition gemäß Fig. 5 in seine in Fig. 5 gestrichpunktet dargestellte Löseposition verschwenkt.

Bei den in den Zeichnungen dargestellten Ausführungsbeispielen ist das Griffteil 23 das Betätigungselement. Alternativ kann selbstverständlich auch vorgesehen sein, einem nicht dargestellten Betätigungselement lediglich ein Griffteil 23 zur Betätigung zu zuordnen.

## Patentansprüche

1. Vorrichtung (10) zur Aufnahme einer flexiblen, insbesondere von einer Wickelwelle entgegen der Wirkung eines Federmotors abziehbaren Werkstoffbahn (12) einer Kfz-Sicherheitseinrichtung, wie Sicherheitsnetz (13), Laderaumabdeckung (14) od. dgl., mit einem kassettenartig ausgebildeten Gehäuse (11), wobei an dem Gehäuse (11) Befestigungselemente (18, 19, 27) zur lösbaren Anbringung des Gehäuses (11) an einer Fahrzeugwand (15) angeordnet sind, **dadurch gekennzeichnet, dass** die Befestigungselemente (18, 19, 27) gemeinsam mit fahrzeugseitig angeordneten Gegenelementen (28, 29) ein Drehlager für eine Schwenkbewegung des Gehäuses (11) relativ zur Fahrzeugwand (15) ausbilden.

2. Vorrichtung nach Anspruch 1, **dadurch gekennzeichnet, daß** die Befestigungselemente (18) wenigstens einen klauenartigen Vorsprung (19) umfassen

3. Vorrichtung nach Anspruch 1 oder 2, **dadurch gekennzeichnet, daß** den Befestigungselementen (18) wenigstens ein federbelasteter Riegel (20) zugeordnet ist.

4. Vorrichtung nach Anspruch 3, **dadurch gekennzeichnet, daß** dem Riegel (20) eine Führungsfläche (39) zugeordnet ist.

5. Vorrichtung nach Anspruch 3 oder 4, **dadurch gekennzeichnet, daß** der Riegel (20) einen Betätigungsansatz (21) aufweist.

6. Vorrichtung nach einem der Ansprüche 3 bis 5, **dadurch gekennzeichnet, daß** der Riegel (20) von einem zentralen Betätigungselement (23) betätigbar ist.

7. Vorrichtung nach Anspruch 6, **dadurch gekennzeichnet, daß** dem Betätigungselement (23) eine schwenkbare Welle (22) zugeordnet ist.

8. Vorrichtung nach Anspruch 6 oder 7, **dadurch gekennzeichnet, daß** wenigstens zwei Riegel (20) in im wesentlichen symmetrischer Anordnung vorgesehen sind, die von dem Betätigungselement (23) gemeinsam betätigbar sind.

9. Vorrichtung nach einem der vorangegangenen Ansprüche, **dadurch gekennzeichnet, daß** die Gegenelemente taschenartige Aufnahmen (36a, 36b) umfassen.

10. Vorrichtung nach einem der vorangegangenen Ansprüche, **dadurch gekennzeichnet, daß** die Gegenelemente einen im wesentlichen T-förmigen Flansch (29) umfassen.

11. Vorrichtung nach Anspruch 9 oder 10, **dadurch gekennzeichnet, daß** die Gegenelemente (28, 29, 36a, 36b) im wesentlichen bündig mit einer Ebene (E) abschließen, entlang derer sich die Fahrzeugwand (15, 37) erstreckt.

12. Vorrichtung nach einem der vorangegangenen Ansprüche, **dadurch gekennzeichnet, daß** der Schwerpunkt (S) der Vorrichtung (10) so gewählt ist, daß bei im montierten Zustand befindlicher Vorrichtung (10) der Schwerpunkt (S) der Vorrichtung (10) auf der der Fahrzeugwand (15, 37) abgewandten Seite einer durch den Drehlagerbereich (27, 28) zum Erdmittelpunkt verlaufenden Geraden (m) liegt.

13. Vorrichtung nach einem der Ansprüche 1 bis 11, **dadurch gekennzeichnet, daß** der Schwerpunkt (S) der Vorrichtung (10) so gewählt ist, daß bei im montierten Zustand befindlicher Vorrichtung (10) der Schwerpunkt (S) der Vorrichtung (10) auf der der Fahrzeugwand zugewandten Seite einer durch den Drehlagerbereich (27, 28) zum Erdmittelpunkt verlaufenden Geraden (m) liegt.

## Claims

1. A device (10) for holding a flexible material web (12), especially a material web drawable from a winding roller against the action of a spring drive, of a vehicle security device, such as a security net (13), loading space cover (14) or the like, having a housing (11) of cartridge-type construction, fixing elements (18, 19, 27) for detachable mounting of the housing (11) on a vehicle wall (15) being arranged on the housing (11), **characterised in that** jointly with counterparts (28, 29) arranged on the vehicle, the fixing elements (18, 19, 27) form a pivot bearing for a pivoting movement of the housing (11) relative to the vehicle wall (15).

2. A device according to claim 1, **characterised in that** the fixing elements (18) comprise at least one claw-like projection (19).

3. A device according to claim 1 or 2, **characterised in that** at least one spring-loaded locking bolt (20) is associated with the fixing elements (18).

4. A device according to claim 3, **characterised in that** a guidance face (39) is associated with the locking bolt (20).

5. A device according to claim 3 or 4, **characterised in that** the locking bolt (20) has an operating lug (21).

6. A device according to any one of claims 3 to 5, **characterised in that** the locking bolt (20) is operable by a central operating element (23).

7. A device according to claim 6, **characterised in that** a pivotable shaft (22) is associated with the operating element (23).

8. A device according to claim 6 or 7, **characterised in that** at least two locking bolts (20) that are jointly operable by the operating element (23) are provided in a substantially symmetrical arrangement.

9. A device according to any one of the preceding claims, **characterised in that** the counterparts comprise pocket-like retainers (36a, 36b).

10. A device according to any one of the preceding claims, **characterised in that** the counterparts comprise a substantially T-shaped flange (29).

11. A device according to claim 9 or 10, **characterised in that** the counterparts (28, 29, 36a, 36b) terminate substantially flush with a plane (E) along which the vehicle wall (15, 37) extends.

12. A device according to any one of the preceding claims, **characterised in that** the centre of gravity (S) of the device (10) is selected so that when the device (10) is in its mounted state the centre of gravity (S) of the device (10) lies on the side remote from the vehicle wall (15, 37) of a straight line (m) running through the pivot bearing region (27, 28) to the geocentre.

13. A device according to any one of claims 1 to 11, **characterised in that** the centre of gravity (S) of the device (10) is selected so that when the device (10) is in its mounted state the centre of gravity (S) of the device (10) lies on the side facing the vehicle wall of a straight line (m) running through the pivot bearing region (27, 28) to the geocentre.

## Revendications

1. Dispositif (10) destiné à recevoir une bande de matériau (12) flexible d'un système de sécurité de véhicule, comme un filet de sécurité (13), un volet cache-bagages (14) ou similaire, pouvant notamment être tirée par un arbre d'enroulement dans la direction opposée à l'action d'un moteur à ressort, comprenant un boîtier (11) conçu à la façon d'une cassette, des éléments de fixation (18, 19, 27) destinés à aménager de façon amovible le boîtier (11) sur une paroi de véhicule (15) étant disposés sur le boîtier (11), **caractérisé en ce que** les éléments de fixation (18, 19, 27) forment conjointement avec des contre-éléments (28, 29) disposés côté véhicule un palier pivotant pour un déplacement pivotant du boîtier (11) par rapport à la paroi de véhicule (15).

2. Dispositif selon la revendication 1, **caractérisé en ce que** les éléments de fixation (18) comportent au moins une saillie (19) du type griffe.

3. Dispositif selon la revendication 1 ou 2, **caractérisé en ce qu'**au moins un verrou (20) sollicité par un ressort est associé aux éléments de fixation (18).

4. Dispositif selon la revendication 3, **caractérisé en ce qu'**une surface de guidage (39) est associée au verrou (20).

5. Dispositif selon la revendication 3 ou 4, **caractérisé en ce que** le verrou (20) comprend une tubulure d'actionnement (21).

6. Dispositif selon l'une quelconque des revendications 3 à 5, **caractérisé en ce que** le verrou (20) peut être actionné par un élément d'actionnement central (23).

7. Dispositif selon la revendication 6, **caractérisé en ce qu'**un arbre pivotant (22) est associé à l'élément d'actionnement (23).

8. Dispositif selon la revendication 6 ou 7, **caractérisé en ce qu'**au moins deux verrous (20) sont prévus selon une disposition sensiblement symétrique, lesquels verrous peuvent être actionnés conjointement par l'élément d'actionnement (23).

9. Dispositif selon l'une quelconque des revendications précédentes, **caractérisé en ce que** les contre-éléments comportent des réceptions du type poche (36a, 36b).

10. Dispositif selon l'une quelconque des revendications précédentes, **caractérisé en ce que** les contre-éléments comportent une bride (29) sensiblement en forme de T.

11. Dispositif selon la revendication 9 ou 10, **caractérisé en ce que** les contre-éléments (28, 29, 36a, 36b) se terminent sensiblement en affleurement avec un plan (E), le long duquel s'étend la paroi de véhicule (15, 37).

12. Dispositif selon l'une quelconque des revendications précédentes, **caractérisé en ce que** le centre de gravité (S) du dispositif (10) est sélectionné de sorte que lorsque le dispositif (10) se situe à l'état monté, le centre de gravité (S) du dispositif (10) se situe sur le côté, opposé à la paroi de véhicule (15, 37), d'une ligne droite (m) s'étendant à travers la zone de palier pivotant (27, 28) en direction du centre de la terre.

13. Dispositif selon l'une quelconque des revendications 1 à 11, **caractérisé en ce que** le centre de gravité (S) du dispositif (10) est sélectionné de sorte que lorsque le dispositif (10) se situe à l'état monté, le centre de gravité (S) du dispositif (10) se situe sur le côté, tourné vers la paroi de véhicule, d'une ligne droite (m) s'étendant à travers la zone de palier pivotant (27, 28) en direction du centre de la terre.
